**Europäisches Patentamt**

**European Patent Office**

**Office européen des brevets**

(19)

(11) Veröffentlichungsnummer: **0 129 705**
**B1**

(12) # EUROPÄISCHE PATENTSCHRIFT

(45) Veröffentlichungstag der Patentschrift:
26.11.86

(51) Int. Cl.⁴: **A 22 C 13/00**

(21) Anmeldenummer: **84105734.2**

(22) Anmeldetag: **19.05.84**

(54) **Rauchdurchlässiger, verstärkungsfreier Film auf Basis von regenerierter Cellulose zur Herstellung von Wursthüllen.**

(30) Priorität: **25.05.83 DE 3318906**

(43) Veröffentlichungstag der Anmeldung:
**02.01.85 Patentblatt 85/1**

(45) Bekanntmachung des Hinweises auf die Patenterteilung:
**26.11.86 Patentblatt 86/48**

(84) Benannte Vertragsstaaten:
**AT BE CH DE FR GB IT LI LU NL SE**

(56) Entgegenhaltungen:
**EP-A-0 058 240**
**DE-A-2 324 065**
**GB-A-1 002 752**

(73) Patentinhaber: **HOECHST AKTIENGESELLSCHAFT,**
**Postfach 80 03 20, D-6230 Frankfurt am Main 80**
**(DE)**

(72) Erfinder: **Andrä, Klaus, Dr., Konrad-Adenauer-**
**Strasse 10, D-6501 Zornheim (DE)**
Erfinder: **Bytzek, Max, Pappelweg 13, D-6200**
**Wiesbaden-Naurod (DE)**
Erfinder: **Hutschenreuter, Elfriede, Haardtstrasse**
**116, D-6208 Bad-Schwalbach (DE)**
Erfinder: **Lang, Hans-Ulrich, Dr., Weinfeldstrasse**
**17, D-6200 Wiesbaden (DE)**

EP 0 129 705 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**0 129 705**

## Beschreibung

Die Erfindung bezieht sich auf einen rauchdurchlässigen, verstärkungsfreien Film auf Basis von regenerierter Cellulose mit hoher Reißfestigkeit in Längs- und Querrichtung und auf ein Verfahren zu seiner Herstellung, bei dem man einen bahnförmigen Film aus Viskose koaguliert, zu Cellulosehydratgel regeneriert und durch Trocknen in regenerierte Cellulose überführt. Der Film findet Verwendung zur Herstellung von schlauchförmigen Wursthüllen, wobei man den bahnförmigen Film zu einem Schlauch formt und die Randzonen miteinander verbindet.

Die Herstellung von bahnförmigen verstärkungsfreien Filmen aus regenerierter Cellulose (Zellglas, Cellulosehydrat) nach dem Viskoseverfahren ist seit langem bekannt (US-A-2,991,510). Diese Filme werden für verschiedene Verpackungsaufgaben, insbesondere als Einschlagfolie, eingesetzt.

Die Herstellung von Wursthüllen aus solchen flachen Bahnen wird in einigen neueren Druckschriften beschrieben (EP-A-0 037 543, EP-A-0 058 240). Hierbei wird die zu einem Schlauch gekrümmte Bahn entlang der sich überlappenden Randzonen oder mit einem beide Randzonen überdeckenden Folienstreifen verklebt. Wie sich nun gezeigt hat, ist allerdings zur Herstellung einer solchen Wursthülle mit Klebenaht ein bekannter verstärkungsfreier Film aus regenerierter Cellulose, d.h. ein Film ohne Faserverstärkung, wie er bisher als Verpackungsfolie verwendet wurde, kaum geeignet, da er den bei der Verarbeitung der Wursthülle einwirkenden mechanischen Belastungen kaum standhalten kann. Die maschinelle Herstellung von Wurstwaren, die geräuchert werden müssen, insbesondere von Würsten vom Brühwursttyp, stellt an das Hüllenmaterial wesentlich höhere mechanische Anforderungen als es bei anderen Verpackungen der Fall ist. Beim Füllen, Räuchern, Brühen und Trocknen wird das Hüllenmaterial stark gedehnt und beim Portionieren, d.h. beim Abdrehen von einzelnen Würsten, stark verdrillt. Auch das mit hoher Geschwindigkeit durchgeführte maschinelle Raffen der Schläuche zu Raupen ebenso wie das übliche maschinelle Abschälen der Schlauchhülle vom Füllgut bei der Herstellung von hautlosen Brühwürstchen (Frankfurter oder Wiener Würstchen) stellt hohe mechanische Anforderungen an das Hüllenmaterial, denen übliche Folien aus regenerierter Cellulose nicht gewachsen sind.

Nach der EP-A-0 076 436 soll das zur Herstellung von Wursthüllen mit Klebenaht geeignete Bahnmaterial aus nicht faserverstärkter Cellulose im nassen Zustand eine Reißfestigkeit jeweils in Quer- und in Längsrichtung von 15 bis 30 N/mm$^2$ (DIN 53 455) zeigen, wobei die Reißfestigkeit in Querrichtung gleich oder größer ist im Verhältnis zur Reißfestigkeit in Längsrichtung. Wie sich daraus ergibt, soll der Orientierungsgrad, das ist der Quotient aus Reißfestigkeit in Längsrichtung und Reißfestigkeit in Querrichtung, jeweils gemessen nach DIN 53 455, nach dieser Druckschrift bei 1, vorzugsweise aber bei Werten von kleiner als 1 liegen. Ein solcher Film soll nach dieser Druckschrift durch übliche Längs- und/oder Querstreckung hergestellt werden.

Nun hat ein verstärkungsfreier Film aus regenerierter Cellulose mit vergleichsweise hoher Reißfestigkeit zwar den Vorteil, daß er gewissen mechanischen Belastungen wie sie beim Einpressen von Wurstbrät in die Wursthülle und Brühen der Wurst auftreten - besser standhält. Wie sich aber gezeigt hat, machen hohe Reißfestigkeiten allein die bisher bekannten Filme aus regenerierter Cellulose zur Herstellung von schlauchförmigen Wursthüllen mit einer Längsnaht nicht geeignet, wenn sie beim Ein-Pressen von Wurstbrät durch Abdrehen zu einzelnen Würsten portioniert werden sollen. Bei diesem Vorgang wird der unter Druck stehende, gefüllte Teil der Schlauchhülle in bestimmten Abständen, die der gewünschten Wurstlänge entsprechen, durch mehrmaliges Drehen der Schlauchhülle portioniert. Das unter Spannung stehende, durchgefeuchtete Hüllenmaterial wird dabei örtlich hinsichtlich seiner Spleißfestigkeit und seiner Fähigkeit, verdrillt zu werden, stark beansprucht. Außerdem muß das Wurstbrät aus dem zu verdrillenden Teil der Hülle verdrüngt und weggedrückt werden. Für diese Belastungen sind die bekannten bahnförmig hergestellten Cellulosefilme zu spröde.

Es ist deshalb Aufgabe der Erfindung, einen Film der eingangs genannten Art zu finden, der zur Herstellung von Wursthüllen mit einer Längsnaht geeignet ist, der insbesondere den mechanischen Belastungen, denen die Wursthüllen ausgesetzt sind, besser standhält und der sich vor allem beim Portionieren abdrehen läßt, ohne daß ein Spleißen des Hüllenmaterials eintritt.

Eine weitere Aufgabe der Erfindung besteht darin, ein Verfahren anzugeben, das auf einfache Weise die Herstellung eines solchen Filmes erlaubt, wobei insbesondere auf aufwendige Streckungen des Films bei seiner Herstellung verzichtet werden kann.

Es wurde nun gefunden, daß diese Aufgabe gelöst wird durch einen Film mit den in Anspruch 1 genannten Merkmalen. Dieser Film aus regenerierter Cellulose zeigt nicht nur die in der EP-A-0 076 436 genannte hohe Reißfestigkeit, sondern ist auch besonders elastisch, wobei diese Eigenschaft ausgedrückt wird durch die nach DIN 53 374 gemessene vergleichsweise hohe Wechselbiegezahl von 5.000 bis 8.000, insbesondere 5.500 bis 7.000, in Längsrichtung und 9.000 bis 16.000, insbesondere 11.000 bis 15.000 in Querrichtung. Ein weiteres wesentliches Merkmal für einen optimalen Film aus regenerierter Cellulose für den genannten Zweck ist der Orientierungsgrad, der bei Werten zwischen 1,00 und 1,20, insbesondere größer als 1,00 und bis 1,10, liegen muß. Es reicht aber überraschenderweise aus, wenn der Film eine relativ geringe Orientierung in Längsrichtung zeigt, wie sie durch das übliche Ziehen des Films in Maschinenrichtung bei seiner Herstellung erhalten wird. Eine weitergehende Verstreckung des Films, etwa in Längsrichtung durch verschieden schnell laufende Transportwalzen oder in Querrichtung durch Streckrahmen, ist nicht erforderlich. Weitere wesentliche Merkmale des Films sind die Naßberstfestigkeit und das Dimensionsverhalten beim Übergang vom im wesentlichen trockenen in den nassen Zustand, wie in den Ansprüchen 2 und 3 angegeben.

2

0 129 705

Die obengenannte Aufgabe wird weiterhin gelöst durch das Verfahren mit den in Anspruch 4 angegebenen Merkmalen, durch die Verwendung nach Anspruch 6 und 8 und durch die Wursthülle nach Anspruch 7.

Der rauchdurchlässige Film aus regenerierter Cellulose zeigt eine Dicke, wie sie bei Wursthüllen üblich ist, nämlich von 15 bis 100, vorzugsweise 25 bis 35 /um, und besteht im wesentlichen aus Cellulose, Wasser und Feuchthaltemittel in üblicher Menge. Er wird hergestellt nach dem Viskoseverfahren.

Die Viskoselösung ist bekanntlich eine alkalische Lösung von Natrium-Cellulosexanthogenat und wird üblicherweise hergestellt durch Umsetzung der aus Cellulose mit Natriumhydroxidlösung erhaltenen Alkalicellulose mit Schwefelkohlenstoff im alkalischen Medium (CH-A-99 494, EP-A-0 012 928). Nach der Reifung wird die Viskose versponnen, d.h. ausgefällt oder koaguliert.

Beim Spinnen wird Viskose aus Breitschlitzdüsen extrudiert und das erhaltene Viskoseband mit geeigneter Flüssigkeit, die Schwefelsäure und Natriumsulfat gelöst enthält, ausgefällt und regeneriert, danach gewaschen und getrocknet. Das zum Ausfällen und Regenerieren vorgesehene erste Bad, in das die Viskose bahnförmig extrudiert wird, ist das sogenannte Spinnbad. Es enthält Schwefelsäure und Natriumsulfat in einem Molverhältnis von 0,7 bis 0,9; die Menge an Schwefelsäure beträgt mindestens 160 g, vorzugsweise 160 bis 220 g, und die Menge an Natriumsulfat mindestens 300 g, vorzugsweise 300 bis 380 g pro Liter Spinnbadflüssigkeit; die Spinnbadflüssigkeit hat eine Temperatur von mindestens 40, vorzugsweise mindestens 50, insbesondere 50 bis 60°C. Das Spinnbad befindet sich entweder in einer Kufe, durch die das Viskoseband hindurchgezogen wird, oder man läßt die Spinnbadflüssigkeit aus Düsen auf das aus der Breitschlitzdüse ausgetretene Viskoseband ausströmen.

Es ist überraschend und nicht vorhersehbar, daß durch die Einstellung der erfindungswesentlichen Spinnbadbedingungen eine wesentliche Verbesserung der Filmeigenschaften, insbesondere hinsichtlich Reißfestigkeit, Orientierungsgrad, Wechselbiegezahl, Naßberstfestigkeit und Dimensionsverhalten erreicht werden kann.

Mit diesem Verfahren werden die komplizierten Techniken des Verstreckens von Flachmaterial (US-A-2,698,967) bzw. die Nachteile des Rundschlauchspinnens (GB-A-1.002.752) vermieden.

Es ist zweckmäßig, in den auf das Regenerieren folgenden Bädern einen abgestuften und reduzierten Salz- und Säuregehalt und die Badtemperatur so einzustellen, daß die weitere Koagulation des Cellulosehydratgels und das Auswaschen von Begleitstoffen unterstützt werden.

Üblicherweise wird die Entfernung von gebildetem Schwefel durch oxidierende Agentien, wie Salzen der schwefligen Säure oder der unterchlorigen Säure, in nachfolgenden Bädern vorgenommen. Vor dem Trocknen durchläuft das Band aus Cellulosehydratgel außerdem Waschbäder zur Entfernung von Säuren und Salzen sowie eine wäßrige Lösung mit 5 bis 20 gew.-%igen Anteil an Feuchthaltemitteln. Hierzu werden übliche Polyhydroxiverbindungen, wie äthylenglykol, Propylenglykol, Sorbit, Polyäthylenglykole oder Glycerin verwendet, wobei letzteres aus lebensmittelrechtlichen Gründen vorgezogen wird. Der Anteil dieser Feuchthaltemittel im fertigen Produkt beträgt 15 bis 25 Gew.-%, insbesondere 17 bis 20 Gew.-%. Die verschiedenen Behandlungsbäder können außerdem an sich übliche Zusätze enthalten, die dem Endprodukt anwendungstechnische Vorteile verleihen, wie z.B. verbessertes Schlupfverhalten, Naßfestigkeit, Schimmelresistenz, Benetzbarkeit, Glanz, Bedruckbarkeit und dgl.

Die Trocknung der Flachbahn zu Endwassergehalten von 8 bis 12 % unter Bildung von regenerierter Cellulose erfolgt beispielsweise in beheizten Kanälen oder an Serien von beheizten Walzen, die vom Bahnmaterial umschlungen werden. Nach dieser Trocknungsstufe wird die Bahn zur Vergleichmäßigung ihrer Feuchte gegebenenfalls befeuchtet und anschließend bei Geschwindigkeiten von 50 bis 100, vorzugsweise 60 bis 70 m/min, unter weitgehender Vermeidung von starken Längszügen, zu größeren Rollen aufgewickelt.

In dem nachfolgenden Beispiel wird gezeigt, wie die Säure- und Salzmenge und das Mol-Verhältnis Säure zu Salz im Spinnbad sowie die Spinnbadtemperatur die Eigenschaften der erhaltenen Cellulosebahn beeinflussen und in welcher Weise diese Eigenschaften sich auf die Ergebnisse der Wurstherstellung auswirken, wenn man aus diesen Filmen Wursthüllen mit einer Klebenaht herstellt.

**Beispiel**

Man stellt in bekannter Weise eine wäßrige, alkalische Viskoselösung (100 Gew.-Teile) her. Hierzu werden 7 Gew.-Teile veredelter Holzzellstoff der Marke ® Buckeye V5 ELG (Hersteller Buckeye, USA) mit 5,8 Gew.-Teilen Natriumhydroxid zu Alkalicellulose und diese durch Reaktion mit 2,1 Gew.-Teilen Schwefelkohlenstoff zu Cellulosexanthogenat umgesetzt.

Auf einer üblichen, aus Naß- und Trockenteil bestehenden Zellglasspinnmaschine wird die Viskose nach Reifung und Entgasung zu einem klaren, im wesentlichen aus Cellulose, Feuchthaltemittel und Wasser bestehenden Film versponnen. Hierzu wird die Viskose unter Druck aus einer Breitschlitzdüse in das Spinnbad extrudiert, das aus einer erwärmten wäßrigen Lösung von Schwefelsäure und Natriumsulfat besteht. Temperatur und Konzentrationen dieser Lösung werden gemäß Tabelle 1 variiert. Die Beispiele 1 und 2 sind Vergleichsbeispiele. In Beispiel 1 ist das Molverhältnis Säure/Salz zu hoch und in Beispiel 2 ist die Säure- und die Salz-Konzentration zu gering. In Beispiel 3 wird eine Spinnbadtemperatur verwendet, die nicht im bevorzugten Bereich liegt. Die Proben der Beispiele 4 und 5 zeigen sehr gute Eigenschaften und wurden unter optimalen Bedingungen hergestellt.

3

**0 129 705**

Tabelle 1: Spinnbad

| Probe | $H_2SO_4$ g/l | $Na_2SO_4$ g/l | Molverhältnis Säure/Salz | Temperatur °C |
|---|---|---|---|---|
| 1 | 205 | 305 | 0,97 | 52 |
| 2 | 135 | 234 | 0,84 | 52 |
| 3 | 185 | 320 | 0,84 | 42 |
| 4 | 185 | 320 | 0,84 | 52 |
| 5 | 166 | 305 | 0,79 | 52 |

Im Spinnbad beginnt während einer üblichen Verweilzeit, z.B. von etwa 5 sec, eine Verfestigung des Viskosebandes unter Bildung von Cellulosehydratgel, das über eine Vielzahl von Leit- und Umlenkwalzen durch weitere saure und neutrale Waschbäder geführt wird, deren Temperaturen im Bereich von ca. 50 bis 60 °C liegen. Anschließend wird das Band von Restmengen an Schwefel befreit, in dem es durch ein auf 65°C erwärmtes, wäßriges Bad geleitet wird, das 1 bis 2 g Natriumsulfit pro Liter Badflüssigkeit enthält und alkalisch auf pH 9,5 eingestellt ist.

Die Passage durch weitere 7 wäßrige Bäder bei Temperaturen von 40 bis 55 °C dient dem weiteren Reinigen des Bandes aus Cellulosehydratgel und am Ende wird ein auf 55 °C erwärmtes, eine 9 gew.-%ige wäßrige Glycerinlösung enthaltendes Bad durchlaufen. Anschließend wird das nunmehr mit Feuchthaltemittel ausgerüstete Band über eine Vielzahl von auf 65 bis 70 °C geheizte Walzen geführt und auf Endfeuchte getrocknet. Das erhaltene Band aus regenerierter Cellulose wird mit einer Geschwindigkeit von 60 m/min kontinuierlich aufgewickelt.

Alle Proben enthalten 17 % Glycerin und 9 % Wasser und zeigen ein Flächengewicht von 40 $g/m^2$. Nach Lagerung im Normalklima (DIN 50 014, 23 °C, 50 % r.F.) werden sie auf ihre mechanischen Eigenschaften geprüft.

Die Wechselbiegezahl wird nach DIN 53 374 an 15 mm breiten, mit 1.200 g belasteten Streifen aus regenerierter Cellulose als Anzahl der Hin- und Herbiegungen bei einer Frequenz von 500/min bis zum Bruch bestimmt.

Für die Bestimmung der Reißfestigkeit im nassen Zustand werden parallel und quer zur Maschinenrichtung aus dem Band aus regenerierter Cellulose geschnittene, 15 mm breite und 100 mm lange Prüfstreifen für 30 min in Wasser von etwa 20 °C eingelegt und unmittelbar anschließend (Wassergehalt der Probe 60 bis 70 Gew.-%, bezogen auf das Gesamtgewicht) zwischen Klemmbacken einer elektronischen Reißprüfmaschine bis zum Bruch nach DIN 53 455 gedehnt, wobei die Einspannlänge 50 mm und die Dehngeschwindigkeit 50 mm/min beträgt. Die Reißkraft (N) beim Bruch wird auf den Querschnitt ($mm^2$) der nassen Probe umgerechnet und liefert so die Reißfestigkeit in $N/mm^2$. Unter Reißfestigkeit ist somit die Widerstandsfähigkeit des Probekörpers gegenüber der Zugbeanspruchung im Augenblick des Reißens zu verstehen.

Zur Bestimmung der Berstfestigkeit im nassen Zustand werden im Berstversuch analog DIN 53 141 (Teil 2) flache Zuschnitte 30 min in Wasser von etwa 20 °C eingelegt und danach in einer aus Spannringen gebildeten Kammer ringförmig eingeklemmt, einem einseitigen Überdruck ausgesetzt und bis zum Bersten gedehnt. Der gemessene Überdruck (bar) wird durch die Naßdicke (mm) der Probe dividiert, woraus sich die spezifische Berstfestigkeit (bar/mm) ergibt.

Das Dimensionsverhalten wird durch Einlegen von quadratisch zugeschnittenen Proben mit einer Kantenlänge von 100 mm in Wasser von etwa 20°C und Bestimmung der resultierenden Kantenlängenänderung nach 30 min geprüft.

In Tabelle 2 sind die Meßwerte aller Proben 1 bis 5 zusammengestellt.

Tabelle 2: Eigenschaften Flachmaterial

| Probe | Naßreißfestigkeit ($N/mm^2$) längs | quer | Orientierungsgrad | spezifische Berstfestigkeit (bar/mm) | Wechselbiegezahl längs | quer | Dimensionsverhalten (%) längs | quer |
|---|---|---|---|---|---|---|---|---|
| 1 | 20,6 | 17,6 | 1,17 | 7,4 | 4.600 | 7.900 | −1 | +3 |
| 2 | 18,8 | 11,7 | 1,61 | 5,0 | 2.400 | 5.400 | −3 | +5 |
| 3 | 21,8 | 18,6 | 1,17 | 8,2 | 5.900 | 10.100 | −1 | +2 |
| 4 | 22,8 | 22,4 | 1,02 | 9,75 | 6.600 | 14.700 | −1 | +1 |
| 5 | 20,9 | 20,9 | 1,00 | 9,2 | 5.600 | 12.600 | −1 | +1 |

4

Die Proben 1, 2 und 3 besitzen in Querrichtung eine auf unterhalb von 19 N/mm² abgefallene Naßfestigkeit, womit der Orientierungsgrad als Quotient aus Längs- und Querreißfestigkeit auf größer als 1,1 ansteigt. Die spezifische Berstfestigkeit sinkt auf Werte unter 8,5 bar/mm. Der Wert für die Wechselbiegezahl fällt stark ab, besonders quer zur Bahnrichtung und ist im Beispiel 3 gerade noch ausreichend.

Die auf 52 °C erhöhte und damit im bevorzugten Temperaturbereich liegende Spinnbadtemperatur in Beispiel 1 und 2 gewährleistet nicht, daß die gewünschten mechanischen Eigenschaften erreicht werden, da das Molverhältnis Säure/Salz zu hoch (Beispiel 1) bzw. die Säure- und die Salz-Konzentration zu niedrig ist (Beispiel 2). Die Proben 1 und 2 zeigen eine besonders geringe Naßreißfestigkeit in Querrichtung, niedrige Naßberstfestigkeit und unbefriedigende Wechselbiegezahlen.

Die Proben 4 und 5 besitzen vergleichsweise hohe, nämlich über 20 N/mm² liegende Werte für die Naßreißfestigkeit und einen optimalen Orientierungsgrad. Auch liegt die im nassen Zustand gemessene Berstfestigkeit deutlich über 8,5 bar/mm. Das Dimensionsverhalten ist nahezu ausgeglichen, die Werte für die Wechselbiegezahl sind größer als 5.500 in Längsrichtung bzw. größer als 11.000 in Querrichtung.

Aus dem Flachmaterial aus regenerierter Cellulose der Proben 1 bis 5 werden 59 mm breite Streifen geschnitten und nach der Arbeitstechnik gemäß EP-A-0 080 120 zu Schläuchen einer Flachbreite von 28 mm, deren Kanten sich um 3 mm überlaPpen, geformt. Dieser Überlappungsbereich wird mit einem wäßrigen Reaktionsklebstoff aus ® Resamin HW 601 (Hersteller Cassella) gemäß Beispiel 1 der EP-A-0 076 436 verklebt und gleichzeitig eine das spätere Schälen erleichternde Emulsion an die Innenwandung angetragen. Der Schlauch wird aufgewickelt und nach 5 Tagen Lagerzeit mit einer üblichen Raffvorrichtung zu Raupen gerafft.

Die Raupen, die bei einer Schlauchlänge von 26 m eine Länge von 400 mm (Raffverhältnis 65:1) und eine spiralige Verlagerung der Naht aufweisen, werden für Verarbeitungsversuche, die sich auf das Verhalten beim Füllen, Portionieren, Räuchern, Brühen und Schälen beziehen, eingesetzt.

Unter Verwendung einer für hautlose Frankfurter Würstchen typischen Wurstmasse werden Füllversuche an zwei unterschiedlichen Füll- und Portionierautomaten durchgeführt.

(1) Auf einem Füllrohr mit einem Durchmesser von 11,2 mm, das an seiner Mündung einen Füllkopf mit einem Durchmesser von 19,5 mm trägt, werden Raupen unter Entraffen kontinuierlich gefüllt, so daß ununterbrochene Wurstlängen von jeweils 26 m entstehen.

Diese Längen werden auf einer sogenannten Linkermaschine automatisch mit kurzen Garnstücken im Abstand von 18 cm abgebunden.

(2) Auf einem Füllrohr mit einem Durchmesser von 10,7 mm werden Raupen, die vorher einseitig mit einem Endverschluß versehen wurden, in der Weise gefüllt, daß das Füllrohr in den Raupenhohlkanal einfährt, die Raupe in Rotation um ihre Achse versetzt wird, die ausströmende Wurstmasse die Raupe entrafft und die gefüllte, sich drehende Hülle durch Festhalte-Laschen, die automatisch im Abstand von 21 cm eingreifen, durch Abdrehungen portioniert wird.

Die nach (1) und (2) gefüllten Stränge werden in Schlaufenform in eine Räucheranlage gehängt, dort getrocknet und geräuchert, anschließend im Dampf gebrüht und mit Wasser abgekühlt. Durch den Räucher- und Brühvorgang bildet sich auf der Oberfläche der Wurst, unterhalb der Wursthülle, eine Eigenhaut aus koaguliertem Proteinmaterial. Nach kurzem Befeuchten im Wasserbad wird die Wursthülle von der Eigenhaut der Wurst abgeschält. Bei den nach (1) hergestellten Würsten wird eine halbautomatische Vorrichtung, bei den nach (2) ein schnelllaufender Schälautomat verwendet. Die geschälten Würste werden auch als hautlose Würstchen bezeichnet.

Beurteilt werden die Wursthüllen nach ihrer Dehnbarkeit beim Füllen, d.h. nach dem resultierenden Füllkaliber, und nach auftretenden Defekten in Form von Löchern, Aufrissen, Abrissen oder sonstigen Störungen beim Füllen, Portionieren, Räuchern, Brühen usw.

Auch Störungen beim Schälen, z.B. wenn das Hüllenmaterial abreißt und ein kontinuierliches Entfernen nicht möglich ist, werden zur Beurteilung herangezogen.

In Tabelle 3 sind die Füllkaliber und die Häufigkeit von Defekten beim Aufarbeiten der gerafften Wursthüllen 1 bis 5 zusammengefaßt. Zur besseren Vergleichbarkeit wurde die Anzahl der Defekte auf 1.000 m entraffte Schlauchlänge umgerechnet.

Tabelle 3: Füllverhalten

| Schlauch-probe | Füllkaliber mm | Defekte pro 1.00 1fm Schlauch bei | | | |
|---|---|---|---|---|---|
| | | Füllen u. Abbinden (1) | Füllen u. Abdrehen (2) | Räuchern, Brühen usw. | Schälen |
| 1 | 20,4—20,9 | 2 | 2 | 0 | 0 |
| 2 | 21,1—22,5 | 16 | 10 | 3 | 15 |
| 3 | 20,3—20,7 | 1 | 1 | 0 | 0 |
| 4 | 20,3—20,5 | 0 | 0 | 0 | 0 |
| 5 | 20,2—20,5 | 0 | 0 | 0 | 0 |

Es zeigt sich, daß nur das bevorzugte Material der Proben 4 und 5 bzw. die daraus hergestellten Raupen sich ohne Störungen füllen und aufarbeiten lassen sowie konstante Füllkaliber ergeben.

Die Proben 1, 2 und 3 lieferten Defekte beim Abbinden und Abdrehen. Die Probe 2 zeigt infolge Materialschwächen besonders hohe Fehlerquoten; ihre Füllkaliber schwanken stark und liegen zu hoch. Die Probe 3 ist gerade noch akzeptabel.

## Patentansprüche

1. Rauchdurchlässiger, verstärkungsfreier Film auf Basis von regenerierter Cellulose zur Herstellung von schlauchförmigen Wursthüllen mit einer längsaxialen Naht, mit einer Reißfestigkeit von 18 bis 30, insbesondere 20 bis 25 N/mm$^2$, gemessen im nassen Zustand, bei einem Wassergehalt 60 bis 70 Gew.-%, bezogen auf das Gesamtgewicht des Films, jeweils in Längs- und Querrichtung dadurch gekennzeichnet, daß der Orientierungsgrad des Films 1,00 bis 1,20, insbesondere größer als 1,00 und bis 1,10, und seine Wechselbiegezahl in Längsrichtung 5.000 bis 8.000, insbesondere 5.500 bis 7.000, und in Querrichtung 9.000 bis 16.000, insbesondere 11.000 bis 15.000, beträgt.

2. Film nach Anspruch 1, dadurch gekennzeichnet, daß seine Naßberstfestigkeit mindestens 8, vorzugsweise 8,5 bis 12 bar/mm beträgt.

3. Film nach Anspruch 1 oder 2, dadurch gekennzeichnet, daß der im Normklima konditionierte Film, d.h. ein Wassergehalt von 6 bis 10 Gew.-%, bezogen auf das Gesamtgewicht des Films, nach einer Lagerung von 30 Minuten in Wasser von 20°C eine Längenabnahme von höchstens 3 %, vorzugsweise höchstens 1 %, und eine Breitenzunahme von höchstens 5 %, vorzugsweise höchstens 2 %, bezogen jeweils auf seine Ausgangsmaße im Normklima, zeigt.

4. Verfahren zur Herstellung eines rauchdurchlässigen, verstärkungsfreien Films auf Basis von regenerierter Cellulose nach einem der Ansprüche 1 bis 3, bei dem Viskose bahnförmig extrudiert wird, und die Viskose danach durch Behandlung mit erwärmter Spinnlösung ausgefällt und zu Cellulosehydratgel regeneriert wird, dadurch gekennzeichnet, daß die zur Ausfällung vorgesehene Spinnlösung je Liter mindestens 160, insbesondere 160 bis 220 g Schwefelsäure und mindestens 300, insbesondere 300 bis 380 g Natriumsulfat umfaßt und das Molverhältnis von Schwefelsäure zu Natriumsulfat 0,7 bis 0,9 beträgt.

5. Verfahren nach Anspruch 4, dadurch gekennzeichnet, daß die Temperatur der besagten Spinnlösung wenigstens 40, vorzugsweise wenigstens 50, insbesondere 50 bis 60 °C beträgt.

6. Verwendung der Folie nach einem der Ansprüche 1 bis 3 zur Herstellung von Wursthüllen mit einer längsaxial sich erstreckenden Naht.

7. Schlauchförmige Wursthülle mit einer längsaxial verlaufenden Naht, wobei das rauchdurchlässige Hüllenmaterial der Wursthülle aus einem Film aus regenerierter Cellulose besteht, dadurch gekennzeichnet, daß das Hüllenmaterial aus einem Film nach einem der Ansprüche 1 bis 3 besteht.

8. Verwendung der Wursthülle nach Anspruch 7 zur Herstellung von hautlosen Würstchen.

## Claims

1. Smoke-permeable, non-reinforced film based on regenerated cellulose, for manufacturing tubular sausage casings which are provided with a seam extending in the direction of their longitudinal axes, the film having a tear strength, both in the longitudinal and transverse directions, of from 18 to 30 N/mm$^2$, particularly of from 20 to 25 N/mm$^2$, as measured in the wet state, at a water content of from 60 to 70 percent by weight, based on the total weight of the film, wherein the degree of orientation of the film is in the range from 1.00 to 1.20, and is particularly greater than 1.00 and up to 1.10, and its number of alternate bends ranges from 5,000 to 8,000, particularly from 5,500 to 7,000, in the longitudinal direction, and from 9,000 to 16,000, particularly from 11,000 to 15,000 in the transverse direction.

2. A film as claimed in claim 1, wherein the wet bursting strength is at least 8 bar/mm, and is preferably in the range from 8.5 to 12 bar/mm.

3. A film as claimed in claim 1 or claim 2, wherein the film, which has been conditioned in standard atmosphere, i.e., which has a water content of from 6 to 10 percent by weight, based on the total weight of the film, having been soaked in water of 20°C for 30 min shows a reduction in length of not more than 3 %, preferably not more than 1 %, and an increase in width of not more than 5 %, preferably not more than 2 %, in each case based on its initial dimensions in standard atmosphere.

4. Process for the production of a smoke-permeable, non-reinforced film based on regenerated cellulose, as claimed in any of claims 1 to 3, comprising extruding viscose in the form of a web and thereafter precipitating the viscose by treating it with a heated casting solution and regenerating it into cellulose hydrate gel, wherein the casting solution provided for precipitation comprises, per liter of solution, at least 160 g, particularly from 160 to 220 g, of sulfuric acid and at least 300 g particularly from 300 to 380 g of sodium sulfate, and the molar ratio sulfuric acid/sodium sulfate is in the range from 0.7 to 0.9.

5. A process as claimed in claim 4, wherein the temperature of said casting solution is at least 40°C, preferably at least 50°C, and is particularly in the range from 50 to 60°C.

6. Use of the film as claimed in any of claims 1 to 3, for manufacturing sausage casings which have a seam extending in the direction of their longitudinal axes.

7. Tubular sausage casing which has a seam extending in the direction of its longitudinal axis and the smokepermeable casing material of which comprises a film of regenerated cellulose, wherein the casing material comprises a film as claimed in any of claims 1 to 3.

8. Use of the sausage casing as claimed in claim 7 in the production of skinless sausages.

**Revendications**

1. Pellicule non renforcée, perméable à la fumée, à base de cellulose régénérée, pour la fabrication d'enveloppes pour saucisses en forme de boyau, comportant un joint suivant l'axe longitudinal, ayant une résistance à la déchirure de 18 à 30, en particulier de 20 à 25 N/mm$^2$, mesurée respectivement dans le sens de la longueur et dans le sens transversal, à l'état humide, à une teneur en eau de 60 à 70% en poids, par rapport au poids total de la pellicule, caractérisée en ce que le degré d'orientation de la pellicule va de 1,00 à 1,20, en particulier est supérieur à 1,00 et va jusqu'à 1,10, et son nombre de pliages alternés va, dans le sens de la longueur, de 5 000 à 8 000, en particulier de 5 500 à 7 000, et dans le sens transversal, de 9 000 à 16 000, en particulier de 11 000 à 15 000.

2. Pellicule selon la revendication 1, caractérisée en ce que sa résistance à l'éclatement à l'état humide s'élève à au moins 8, et va de préférence de 8,5 à 12 bars/mm.

3. Pellicule selon la revendication 1 ou 2, caractérisée en ce que la pellicule conditionnée en atmosphère normalisée, c'est-à-dire à une teneur en eau de 6 à 10% en poids par rapport au poids total de la pellicule, présente après un temps de séjour de 30 minutes dans de l'eau à 20°C une diminution de la longueur de 3% au maximum, de préférence de 1% au maximum, et une augmentation de la largeur de 5% au maximum, de préférence de 2% au maximum, chaque fois par rapport à sa dimension initiale dans l'atmosphère normalisée.

4. Procédé pour la fabrication d'une pellicule non renforcée, perméable à la fumée, à base de cellulose régénérée, selon l'une quelconque des revendications 1 à 3, dans lequel de la viscose en forme de bande continue est extrudée et la viscose est ensuite précipitée par traitement avec une solution de filage chauffée, et régénérée en gel d'hydrate de cellulose, caractérisé en ce que la solution de filage prévue pour la précipitation comprend, par litre, au moins 160, en particulier de 160 à 220 g d'acide sulfurique, et au moins 300, en particulier de 300 à 380 g de sulfate de sodium, et le rapport molaire de l'acide sulfurique au sulfate de sodium va de 0,7 à 0,9.

5. Procédé selon la revendication 4, caractérisé en ce que la température de ladite solution de filage s'élève au moins à 40, de préférence au moins à 50°C, et va en particulier de 50 à 60°C.

6. Utilisation de la pellicule selon l'une quelconque des revendications 1 à 3 pour la fabrication d'enveloppes pour saucisses ayant un joint s'étendant suivant l'axe longitudinal.

7. Enveloppe pour saucisses en forme de boyau ayant un joint s'étendant suivant l'axe longitudinal, le matériau perméable à la fumée de l'enveloppe pour saucisses étant constitué d'une pellicule à base de cellulose régénérée, caractérisée en ce que le matériau de l'enveloppe est constitué d'une pellicule selon l'une quelconque des revendications 1 à 3.

8. Utilisation de l'enveloppe pour saucisses selon la revendication 7 pour la fabrication de saucisses sans peau.